# EUROPEAN PATENT APPLICATION

(11) **EP 1 336 999 A1**
(43) Date of publication of application: **20.08.2003**
(21) Application number: 01972642.1
(22) Date of filing: 01.10.2001
(51) Int. Cl.: H01M 4/96, H01M 8/02

(54) **HIGH POLYMER ELECTROLYTE FUEL CELL**

(30) Priority: 31.10.2000 JP 2000332813; 31.10.2000 JP 2000332814
(71) Applicant: MATSUSHITA ELECTRIC INDUSTRIAL CO., LTD., Kadoma-shi, Osaka 571-8501 (JP)
(72) Inventor: KOBAYASHI, Susumu, Ikoma-shi, Nara 630-0134 (JP); HOSAKA, Masato, Osaka-shi, Osaka 530-0043 (JP)
(74) Representative: Nachshen, Neil Jacob
(86) International application number: JP0108661
(87) International publication number: WO02037586

(57) **Abstract**

The present invention discloses an improved gas diffusion layer for use in porous electrodes of polymer electrolyte fuel cells. The gas diffusion layer comprises a gas flow path having a bottom face facing an electrolyte membrane, and the properties of a carbon fiber that forms the bottom face of the gas flow path are different from the properties of a carbon fiber that forms the side wall of the gas flow path and/or the top face of the gas flow path. It is preferable that there is a difference in the graphitization degree, graphite orientation degree or fiber microstructure, and the hydrophilic group density of the carbon fiber forming the bottom face of the gas flow path is particularly small. Accordingly, it is possible to obtain a gas diffusion layer imparted with water retention property, without sacrificing the gas permeability.

## Description

### Technical Field

The present invention relates to polymer electrolyte fuel cells, and more particularly relates to an improvement of the porous electrodes in the polymer electrolyte fuel cells.

### Background Art

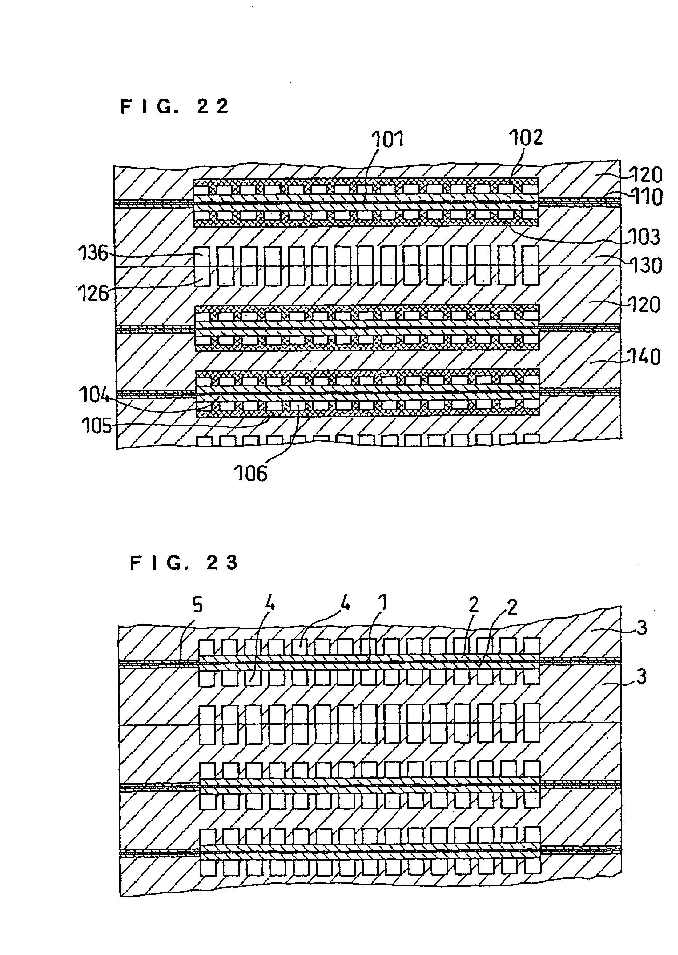

The basic principle of the polymer electrolyte fuel cell includes exposing one side of a hydrogen ion conductive polymer electrolyte membrane to a fuel gas such as hydrogen and exposing the other side to oxygen to synthesize water by chemical reaction through the electrolyte membrane, and extracting the resulting reaction energy electrically. The structure of this type of fuel cell is shown in FIG. 23.

A hydrogen ion conductive polymer electrolyte membrane 1 and a pair of porous electrodes 2 including a catalyst, which sandwich this electrolyte membrane 1, are joined integrally by heat press or other method. The resulting unit is called an electrolyte membrane-electrode assembly (MEA), and can be handled independently. Disposed outside of the electrodes 2 are a pair of conductive separator plates 3 having gas flow paths 4 for supplying a fuel gas or an oxidant gas to the respective electrodes. Placed between each conductive separator plate and the peripheral portion of the electrolyte membrane 1, which is present outside of the electrodes 2, is a gasket 5 for preventing the gases from leaking out. The reaction gases introduced from the gas flow paths 4 of the separator plates 3 electrochemically react at the porous electrodes 2 through the electrolyte membrane 1, and the resulting electric power is collected outside through the separator plates 3.

The requirements for the porous electrodes are good conductivity, gas permeability, water permeability and corrosion resistance. Hence, there has been used a technique by which a carbon fiber (fiber which was baked at a temperature of around 1000° C after a stabilization process and has a graphitization degree of around 50%, this fiber being hereinafter referred to as "carbon fiber") is made into paper or woven into fabric so as to produce a sheet that structurally has gas permeability (hereinafter referred to as "carbonized paper" or "carbonized woven fabric"), and then the sheet is treated with heat at 2000°C or higher temperature to make graphite paper or graphite woven fabric having a graphitization degree of not less than 80% so as to utilize good electric conductivity, corrosion resistance and water repellency of graphite carbon.

In principle, the polymer electrolyte fuel cell needs to supply water participating in ionic conduction to the anode, while water is produced in the cathode. Thus, basically, the anode-side porous electrode needs to promptly permeate the supplied water to the polymer electrolyte membrane, and the cathode-side porous electrode needs to promptly eliminate the generated water from the polymer electrolyte membrane. It is therefore desirable that the porous electrodes have water repellency. However, if there are expectations for a reduction in water to be supplied and a cooling effect provided by temporally storage of supplied/generated water and latent heat of vaporization with an abrupt increase/decrease in load, then appropriate water retention property may be required.

In order to satisfy such controversial requirements, there has been a proposal to use a water-repellent porous electrode and a hydrophilic porous electrode to constitute a porous electrode so as to partly impart hydrophilicity while keeping water repellency as a whole. However, if the entire surface is covered with the hydrophilic porous electrode, there will be a problem that a phenomenon (flooding) in which the hydrophilic porous electrode is clogged with water and interferes with gas permeation is likely to occur.

### Disclosure of Invention

The present invention provides a gas diffusion layer, which is a porous electrode made of a conductive carbon fiber sheet and comprises a gas flow path having a bottom face facing the electrode membrane, or a gas flow path having a bottom face facing the electrolyte membrane and a top face facing the opposite side. Moreover, there is a difference in the carbon fiber structure between the part forming the bottom of the gas flow path and the part forming the side wall of the gas flow path and/or the part forming the top face of the gas flow path.

A polymer electrolyte fuel cell of the present invention is a polymer electrolyte fuel cell comprising: an electrolyte membrane-electrode assembly composed of a hydrogen ion conductive polymer electrolyte membrane and a pair of electrodes sandwiching the hydrogen ion conductive polymer electrolyte membrane; and a pair of conductive separator plates sandwiching the electrolyte membrane-electrode assembly, and characterized in that each of the electrodes has a catalyst layer in contact with the electrolyte membrane, and a gas diffusion layer made of a conductive carbon fiber sheet in contact with the catalyst layer, the gas diffusion layer comprises a gas flow path having a bottom face facing the electrolyte membrane, and the properties of a carbon fiber that forms the bottom face of the gas flow path are different from the properties of a carbon fiber that forms a side wall of the gas flow path.

It is preferable that the hydrophilicity of the carbon fiber forming the bottom of the gas flow path is lower than that of the carbon fiber forming the side wall of the gas flow path.

The present invention provides a polymer electrolyte fuel cell comprising: an electrolyte membrane-electrode assembly composed of a hydrogen ion conductive polymer electrolyte membrane and a pair of electrodes sandwiching the hydrogen ion conductive polymer electrolyte membrane; and a pair of conductive separator plates sandwiching the electrolyte membrane-electrode assembly, the polymer electrolyte fuel cell being characterized in that each of the electrodes has a catalyst layer in contact with the electrolyte membrane; and a gas diffusion layer made of a conductive carbon fiber sheet in contact with the catalyst layer; the gas diffusion layer comprises a gas flow path having a bottom face facing the electrolyte membrane and a top face facing the opposite side, and the properties of a carbon fiber that forms the bottom face of the gas flow path are different from the properties of at least one of a carbon fiber that forms the' top face of the gas flow path and a carbon fiber that forms a side wall of the gas flow path.

Here, it is preferable that the hydrophilicity of the carbon fiber forming the bottom face of the gas flow path is lower than that of at least one of the carbon fiber forming the top face of the gas flow path and the carbon fiber forming the side wall of the gas flow path.

The difference in the graphitization degree, graphite orientation degree, or the fiber microstructure is derived from a difference between mutually different carbon fiber materials selected from the group consisting of PAN-based, pitch-based, cellulose-based, and phenol-based carbon fiber materials.

The porous electrode can be made of a complex of a flat carbon fiber sheet and a carbon fiber sheet having grooves that form a gas flow path on one side.

It is preferable that the carbon fiber sheet having the grooves and the flat carbon fiber sheet have different properties from each other in at least one of their fiber density, pore density, graphitization degree, graphite orientation degree, fiber microstructure, and hydrophilic group density.

### Brief Description of Drawings

FIG. 1 is a plan view of a woven fabric made from carbon fiber raw yarn that is a material for a porous electrode in an example of the present invention.

FIG. 2 is a cross sectional view of the woven fabric.

FIG. 3 is a plan view of two carbon fiber sheets to

be a material for a porous electrode in another example of the present invention.

FIG. 4 is a plan view showing a state where the two sheets are stacked.

FIG. 5 is a cross sectional view of the sheets.

FIG. 6 is a cross sectional view of a sheet produced by weaving another carbon fiber into a fabric that will be a material for a porous electrode in still another example of the present invention.

FIG. 7 is a cross sectional view showing a structural example of an MEA.

FIG. 8 is a cross sectional view showing another structural example of an MEA.

FIG. 9 is a cross sectional view showing still another structural example of an MEA.

FIG. 10 is a cross sectional view showing the process of locally imparting hydrophilicity to an electrode in yet another example of the present invention.

FIG. 11 is a cross sectional view showing the process of manufacturing a porous electrode in another example of the present invention.

FIG. 12 is a cross sectional view of a porous electrode obtained by the manufacturing process.

FIG. 13 is a cross sectional view showing examples of the combination of sheets constituting a similar electrode.

FIG. 14 is a cross sectional view showing the process of locally imparting hydrophilicity to an electrode in still another example of the present invention.

FIG. 15 is a view showing the process of producing a single electrode sheet from four layers of carbon fiber sheets.

FIG. 16 is a front view of the anode side of an MEA in another example.

FIG. 17 is a top view of the MEA.

FIG. 18 is a front view of a cathode-side separator plate.

FIG. 19 is a rear view of the cathode-side separator plate.

FIG. 20 is a cross sectional view cut along the A-A' line in FIG. 18.

FIG. 21 is a front view of an anode-side separator plate.

FIG. 22 is a cross sectional view of essential parts of a fuel cell of an example of the present invention.

FIG. 23 is a cross sectional view of essential parts of a conventional fuel cell.

FIG. 24 is a view showing the relationship between the anode bubbler temperature and the cell voltage at a current density of 200 mA/cm² in a fuel cell of an example of the present invention and a fuel cell of a comparative example.

FIG. 25 is a view showing cell voltage behavior corresponding to increase/decrease of fuel gas in the fuel cells of the example of the present invention and the comparative example.

FIG. 26 is a view showing the relationship between the output current density and the amount of cooling water necessary for keeping the cell temperature at 75°C in the fuel cells of the example of the present invention and the comparative example.

FIG. 27 is a plan view showing the state where layers are exposed out of an electrode sheet composed of a plurality of sheets.

FIG. 28 is a plan view showing how the water repellency of the respective layers of the electrode sheet is evaluated.

FIG. 29 is a view showing the X-ray diffraction patterns and the water repellency index of the respective layers of the electrode sheet.

### Best Mode for Carrying Out the Invention

A gas diffusion layer for use in a polymer electrolyte fuel cell of the present invention comprises a gas flow path having a bottom face facing the electrolyte membrane as described above, and the properties of a carbon fiber that forms the bottom face of the gas flow path are different from the properties of a carbon fiber that forms the side wall of the gas flow path.

In another aspect, the gas diffusion layer of the present invention comprises a gas flow path having a bottom face facing the electrolyte membrane and a top face facing the opposite side, and the properties of a carbon fiber that forms the bottom face of the gas flow path are different from the properties of at least one of a carbon fiber that forms the top face of the gas flow path and a carbon fiber that forms the side wall of the gas flow path.

Typical examples of conductive carbon fibers include PAN-based, pitch-based, rayon-based (cellulose-based), and phenol-based (kynol-based) graphite fibers, and the graphitization degree that they can reach differs depending on the properties of their starting materials. For example, in the case of PAN-based and mesophase pitch-based (also called liquid crystal pitch or anisotropic pitch) graphite fibers, long fibers having a high degree of orientation are obtained in the spinning stage, and the starting materials have simple structure and can readily form a benzene ring. Therefore, if such a fiber is carbonized and graphitized, a carbon fiber with a high degree of crystal orientation and a high degree of graphitization is obtained. On the other hand, in the case of rayon-based and phenol-based graphite fibers, the degree of crystal orientation and the degree of graphitization are both low because of the difficulty in forming a benzene ring due to the complexity of the starting materials and a low degree of crystal orientation originated in the materials.

Even when graphite fibers are of the same type, it is possible to obtain electrodes having differences in the degree of orientation and the degree of graphitization by changing the manufacturing conditions, such as temperature and time. For example, in the case of pitch-based graphite fiber, decant oil (the bottom oil in a petroleum refining distillation column) is treated at a temperature of around 400°C to cause part of the benzene ring to have an anisotropic property by condensation polymerization. Then, a mixture with an isotropic part (mesophase pitch or liquid crystal pitch) is oriented by spinning. Next, the mixture is stabilized, carbonized and graphitized to obtain a graphite fiber. At this time, by increasing or decreasing the treatment temperature or the treatment time in the stage of manufacturing the mesophase pitch, the ratio of the anisotropic part and the isotropic part and the degree of polymerization of the anisotropic part can be controlled. Moreover, by increasing/decreasing the spinning temperature, it is possible to obtain yarn with different degree of orientation. Adoption of such preparation means is reflected in the degree of crystal orientation and the degree of graphitization of the finally obtained graphite fiber.

For example, a PAN-based graphite fiber is produced mainly by the following processes, and, if any one of the processes is incomplete, it is impossible to obtain a fiber with a high degree of graphitization.
1) Manufacturing process of PAN fiber (the stage of polymerizing monomers and spinning);
2) Oxidation process (stabilization of fiber by air oxidation at 200° C to 300°C);
3) Pre-carbonization process (ring condensation by dehydrocyanic acid, in nitrogen at 400°C to 900° C);
4) Carbonization process (ring condensation by denitrogen, in nitrogen at 900° C to 1500°C, and formation of graphite structure); and
5) Graphitization process (graphite crystal growing at 2000°C or higher temperature).

Therefore, for example, by producing a plurality of carbon fibers having differences in their orientation characteristic and graphite structure by decreasing the treatment temperature in the carbonization process and controlling the treatment time, and then bonding a plurality of carbon fiber sheets, which were produced by making the carbon fibers into paper or weaving the carbon fibers into a fabric, together with a binder and graphitizing them under the same condition, it is possible to readily produce a multi-layer carbon sheet that has differences in the degree of crystal orientation and graphitization between the respective layers and thus has a water repellency gradient.

By chemically modifying the thus obtained carbon sheets having differences in their degree of orientation and graphitization by a suitable method, it is possible to adjust the amount of water repellency gradient and order. In other words, in a sheet having a high degree of crystal orientation and graphitization, since the graphite crystal is chemically inactive and there is no space for a modification group to enter therein due to its high degree of orientation, it is difficult to chemically modify such a sheet. On the contrary, it is easy to chemically modify a sheet having a low degree of orientation and graphitization. Hence, if the carbon sheets are treated to have hydrophilicity by using a technique such as oxidation with nitric acid, electrolytic oxidation (anodic oxidation), and steam oxidation, for example, the amount of gradient is increased according to the original water repellency gradient order. On the other hand, after the treatment to impart hydrophilicity, when a treatment to impart water repellency is applied using a fluorocarbon-based water repellent, for example, since the hydrophilic group is modified with fluorocarbon, the carbon sheets have water repellency in the order reverse to the original water repellency gradient order, and the water repellency exceeds the original water repellency. It is thus possible to produce sheets having hydrophilic/water repellent functions of desired order and strength by combining the process of manufacturing the carbon sheets with the chemical modification process.

By taking the above into accounts, it is possible to select materials for forming the respective parts of an electrode made of carbon sheets with a gas flow path. Moreover, a sheet that forms the bottom face of the gas flow path and/or a sheet that forms the top face of the gas flow path can also be composed of a plurality of sheets having differences in their degree of crystal orientation and graphitization.

Referring to the drawings, the following description will explain some embodiments.

In a porous electrode having a gas flow path, a part that needs to have gas permeability is the above-mentioned part forming the bottom of the gas flow path, while a part that needs not to have gas permeability is the above-mentioned part forming the side wall of the gas flow path and the part forming the top face of the gas flow path. Therefore, if the part corresponding to the bottom of the gas flow path is made from water repellent carbon fiber and the side-wall part of the gas flow path and/or the top face part of the gas flow path are made from hydrophilic carbon fiber, it is possible to impart water repellency without sacrificing the gas permeability.

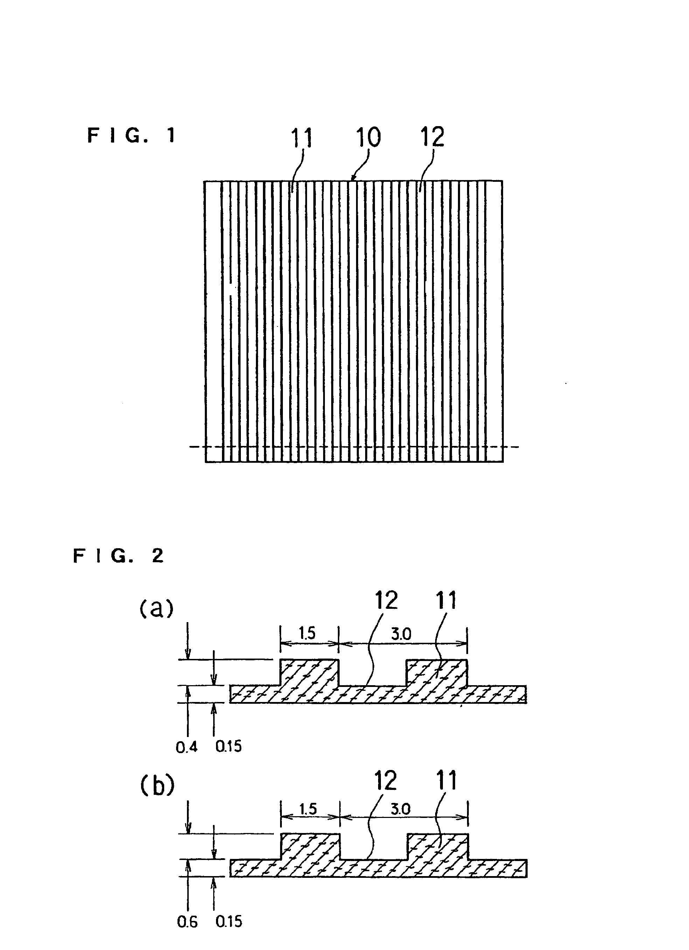

The carbon fiber raw yarn in the spinning stage before being stabilized by oxygen crosslinking has flexibility and can be knitted into any shape. Hence, as shown in FIG. 1 and FIG. 2, a fiber fabric 10 having grooves 12 formed by providing a number of protruding ribs 11 in parallel is prepared, and it is stabilized, carbonized and graphitized. In this manner, it is possible to readily obtain a porous electrode having a gas flow path in the portion of the grooves 12. Moreover, since short fiber of carbon fiber can be made into a mat and felt of any shape, it is possible to obtain a porous electrode having a gas flow path in the same manner.

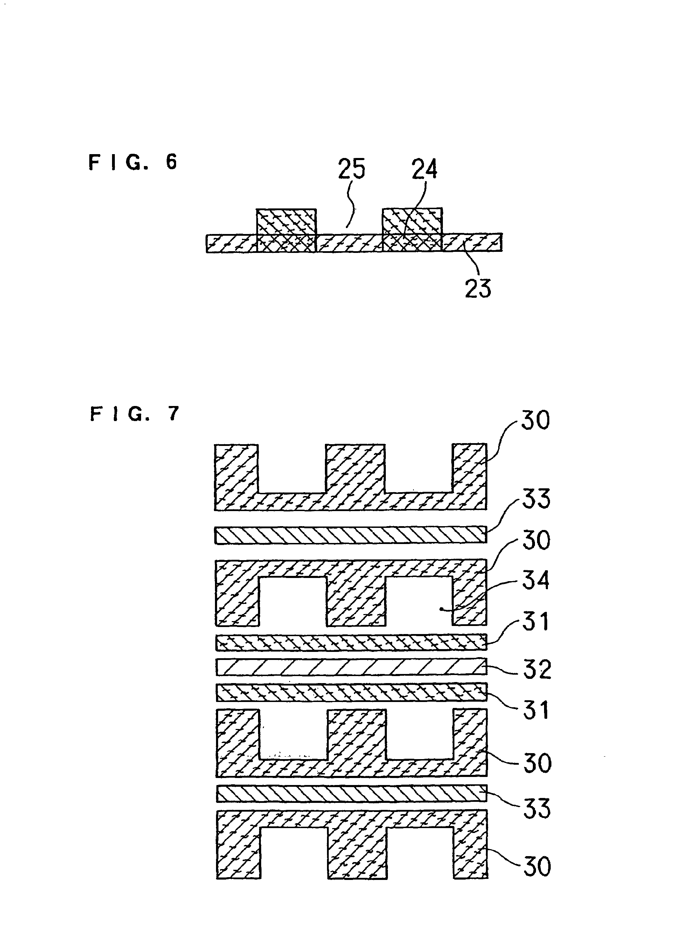

FIG. 6 shows an example in which a side-wall part 24 that forms a groove 25 is produced integrally by weaving another carbon fiber yarn in a raw woven fabric.

The example illustrated above is a method suitable for pitch-based and rayon-based carbon fibers which do not produce much heat during stabilization. This method is not suitable for PAN-based carbon fibers which produce a large amount of heat during stabilization and are hard to stabilize unless being a single yarn.

Next, a method applicable to PAN-based carbon fibers is shown.

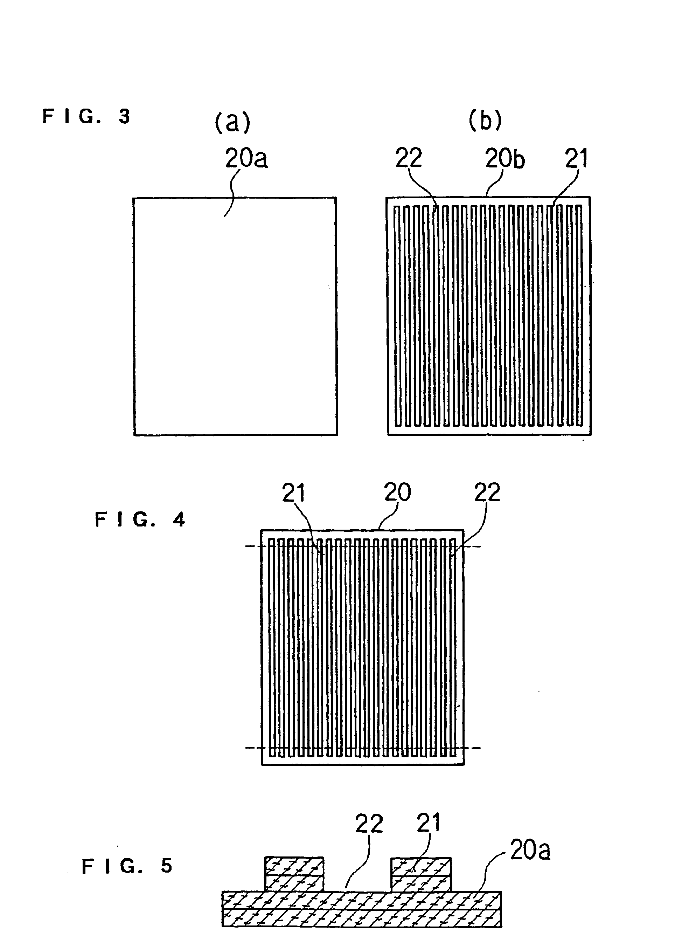

First, as shown in FIG. 3, a carbonized sheet 20a produced by cutting long fiber to a suitable length and making the fiber into paper is bonded to a sheet 20b having slits 22 formed by stamping the same carbonized sheet in a flow path form with a binder (FIG. 4). Then, the binder and the carbonized sheets 20a, 20b are graphitized together, and cut along the broken lines shown in FIG. 4. Consequently, as shown in FIG. 5, a carbon fiber sheet having grooves formed by the slits 22 is obtained. FIG. 5 illustrates an example in which two carbonized sheets 20a and two carbonized sheets 20b are used. The side-wall part is made of the section 21 of the sheets 20b.

By forming the gas flow path in this manner, even a PAN-based carbon fiber which has poor flexibility and has, for example, gone through the carbonization process and partially developed graphite crystal can be formed into a shape similar to that shown in FIG. 1. In other words, even when any kind of carbon fiber is used, it is possible to form a gas flow path according to a suitable processing method.

FIG. 7 shows an example of electrolyte membrane-electrode assembly (MEA) comprising porous electrodes made of carbon sheets obtained as described above. 32 represents a hydrogen ion conductive polymer electrolyte membrane. A pair of water repellent porous electrodes 31 formed by a common method are placed to sandwich this electrolyte membrane 32. A porous electrode 30 placed outside of the electrode 31 is a hydrophilic porous electrode obtained by treating an electrode having grooves 34 formed by a method as described above to impart hydrophilicity using a technique such as oxidation with nitric acid, electrolytic oxidation (anodic oxidation), and steam oxidation, for example. Thus, in an electrode composed of the water repellent porous electrode 31 and the hydrophilic porous electrode 30, the bottom part that is the electrolyte membrane side of the gas flow path 34 has water repellency, while the side-wall part and top face part of the gas flow path 34 have hydrophilicity. In short, with this structure, it is possible to realize a porous electrode imparted with hydrophilicity, without sacrificing the gas permeability. 33 represents a conductive separator plate.

For the raw fiber fabric 23 in FIG. 6 and the sheet 20a of woven fabric or paper which is not stamped in FIG. 3, a carbon fiber having a high degree of crystal orientation and a small surface area, for example, PAN-based or mesophase pitch-based carbon fiber is used. On the other hand, for the carbon fiber yarn woven in the raw fiber fabric 23 in FIG. 6 and the sheet 20b of woven fabric or paper which is stamped in FIG. 3, a carbon fiber having a low degree of crystal orientation (glass form) and a large surface area, for example, phenol-based activated carbon fiber is used. Then, by slightly applying hydrophilic treatment after forming the carbon fibers into the structure shown in FIG. 6 and FIG. 5, the carbon fiber having a low degree of crystal orientation is given priority in hydrophilic treatment and the carbon fiber having a high degree of orientation has almost no hydrophilic modification, thereby making it possible to manufacture a single electrode having a water repellent part and a hydrophilic part.

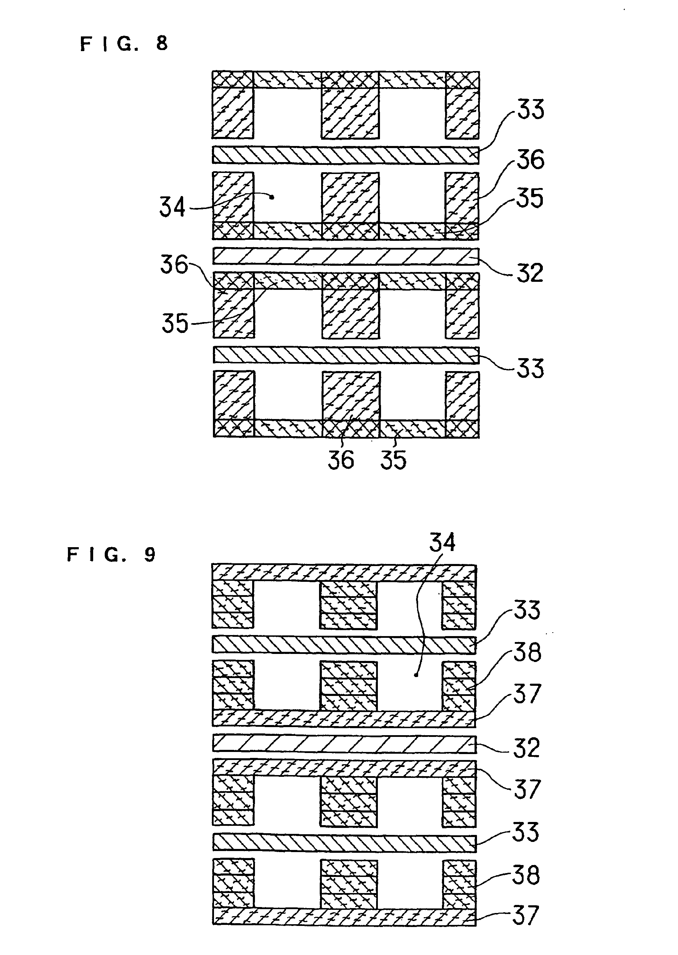

Examples of the MEA comprising porous electrodes thus obtained are shown in FIG. 8 and FIG. 9.

FIG. 8 shows an example using an electrode made of a carbon fiber sheet having the structure as shown in FIG. 6. Specifically, this example uses an electrode in which a side-wall part 36 of the gas flow path 34 was formed by weaving a carbon fiber having a low degree of crystal orientation and a large surface area in a sheet 35 made from a carbon fiber having a high degree of crystal orientation and a small surface area. The MEA is formed by sandwiching the electrolyte membrane 32 between the sheets 35 of two pieces of this electrode.

FIG. 9 shows an example using a carbon fiber sheet having the structure as shown in FIG. 5. Specifically, this example uses an electrode in which the side-wall part of the gas flow path 34 is formed by joining three sheets 38 made from a carbon fiber having a low degree of crystal orientation and a large surface area to a sheet 37 made from a carbon fiber having a high degree of crystal orientation and a small surface area.

Even when the same carbon fibers are used, the water repellent part and the hydrophilic part can be formed by increasing/decreasing the fiber density. The reason for this is that a capillary phenomenon can be utilized with an increase in the density. Since the water repellent part has a low density, the gas permeability is not sacrificed, and the high-density hydrophilic part wet with water can sufficiently function as a gas bulkhead between the flow paths.

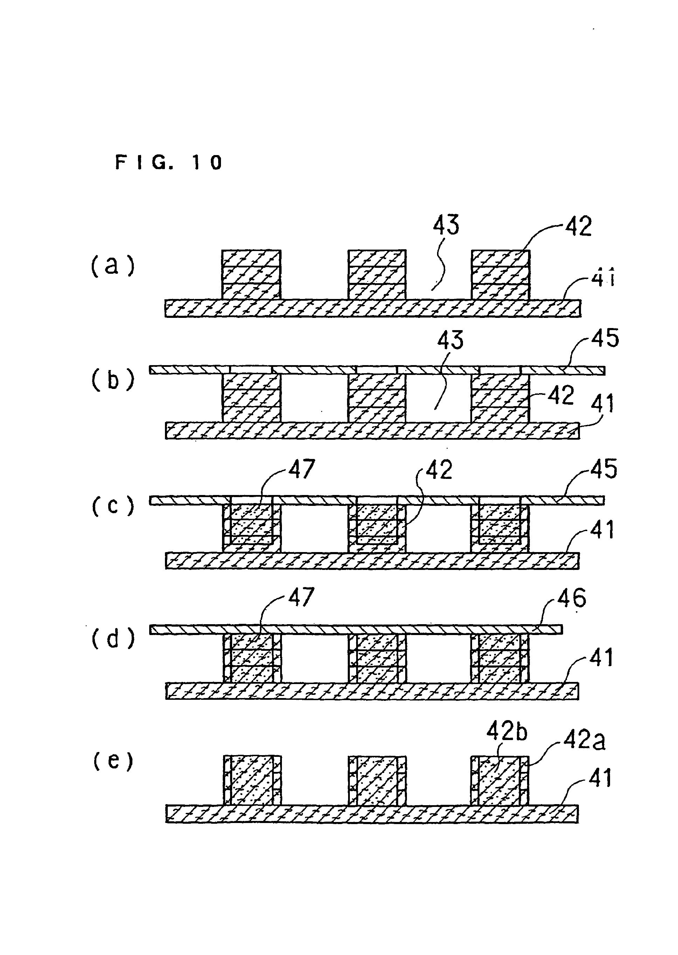

With the use of the porous characteristic of the electrode, it is possible to form the hydrophilic part by filling the side-wall part of the gas flow path with a hydrophilic agent, for example, silica gel. FIG. 10 shows the process of manufacturing such an electrode.

First, a sheet 41 made from a carbon fiber is joined to three sheets made from the same carbon fiber to produce a side-wall part 42 that forms a gas flow path 43 (FIG. 10(a)). Subsequently, a screen 45 is set on the side-wall part 42 (FIG. 10(b)), an ink containing a silica gel powder 47 is printed (FIG. 10(c), and then the ink is pushed into the side-wall part 42 by a pressure plate 46 (FIG. 10(d)). Consequently, an electrode having the side-wall part 42 composed of a portion 42a made from the original carbon fiber and a portion 42b filled with silica gel is formed (FIG. 10(e)).

By suitably combining the above-mentioned techniques, it is possible to impart a desired hydrophilicity to the hydrophilic part while ensuring sufficient gas permeability in the water repellent part.

Next, the following description will explain another method for manufacturing an electrode having a gas flow path comprising the electrode membrane side as its bottom face and the opposite side as its top face.

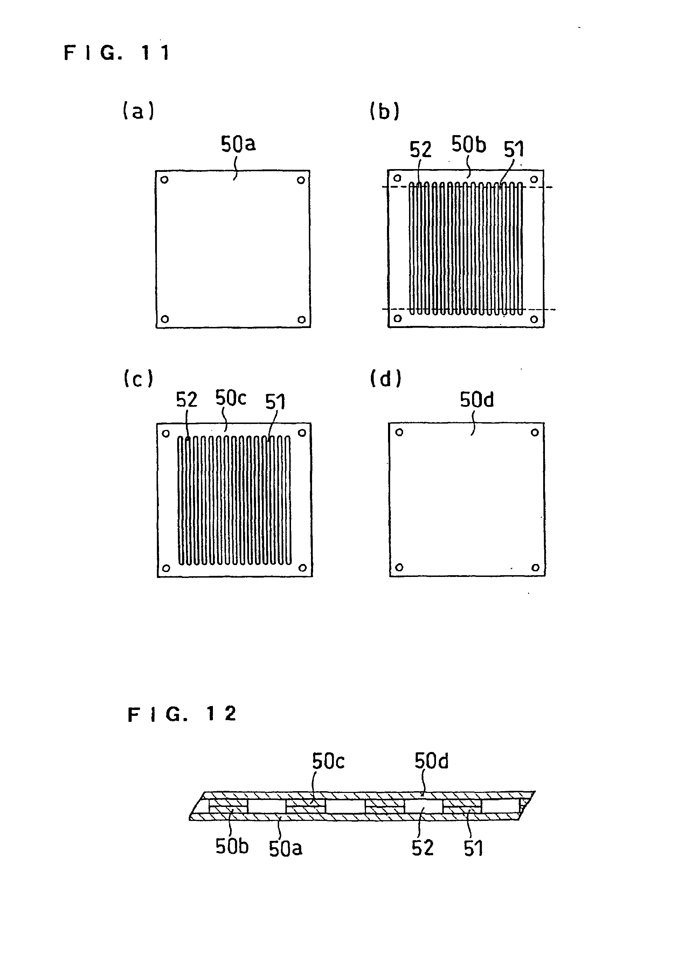

First, as shown in FIG. 11, carbonized sheets 50a, 50d produced by cutting long fiber to a suitable length and making the fiber into paper and sheets 50b, 50c having slits 52 formed by stamping the same carbonized sheets in a flow path form are stacked in the order of the sheets 50a, 50b, 50c and 50d, and bonded together with a binder. Then, the binder and the carbonized sheets are graphitized together, and cut along the broken lines shown in FIG. 11(b). Consequently, as shown in FIG. 12, an electrode comprising the sheet 50a as its bottom face, the sheet 50d as its top face, and a gas flow path formed by the slits 52 is obtained. Here, an example in which the electrode is composed of four sheets of the same material is illustrated, but it is needless to say that the number of the sheets and the material can be changed according to need.

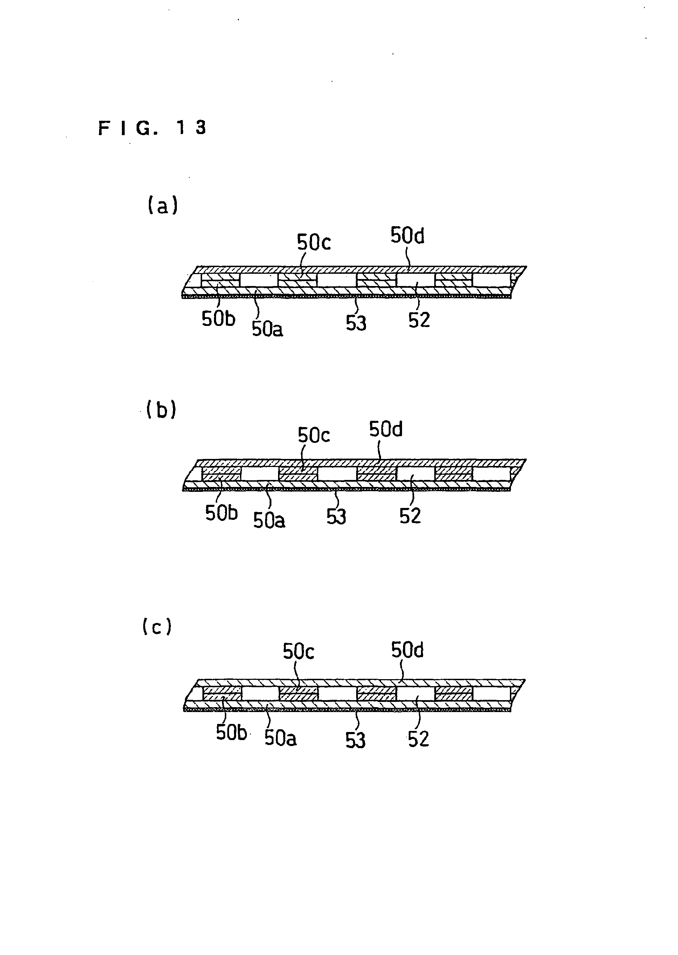

FIG. 13 shows examples of the combination of sheets constituting an electrode produced in the above-described manner. FIG. 13(a) shows an example in which PAN-based or pitch-based water repellent carbon sheets are used for the sheet 50a forming the bottom face of the gas flow path 52 and for the sheets 50b, 50c forming the side-wall part of the gas flow path, and a cellulose-based or phenol-based hydrophilic carbon sheet is used for the sheet 50d forming the top face of the gas flow path. In FIG. 13(b), a water repellent carbon sheet is used for the sheet 50a that forms the bottom face of the gas flow path 52, and hydrophilic carbon sheets are used for the sheets 50b, 50c that form the side-wall part of the gas flow path and for the sheet 50d that forms the top face of the gas flow path. In FIG. 13(c), water repellent carbon sheets are used for the sheet 50a that forms the bottom face of the gas flow path 52 and for the sheet 50d that forms the top face of the gas flow path, and hydrophilic carbon sheets are used for the sheets 50b, 50c that form the side-wall part of the gas flow path. In any of the examples, a water repellent layer 53 is formed on the electrolyte membrane side of the sheet 50a forming the bottom face of the gas flow path.

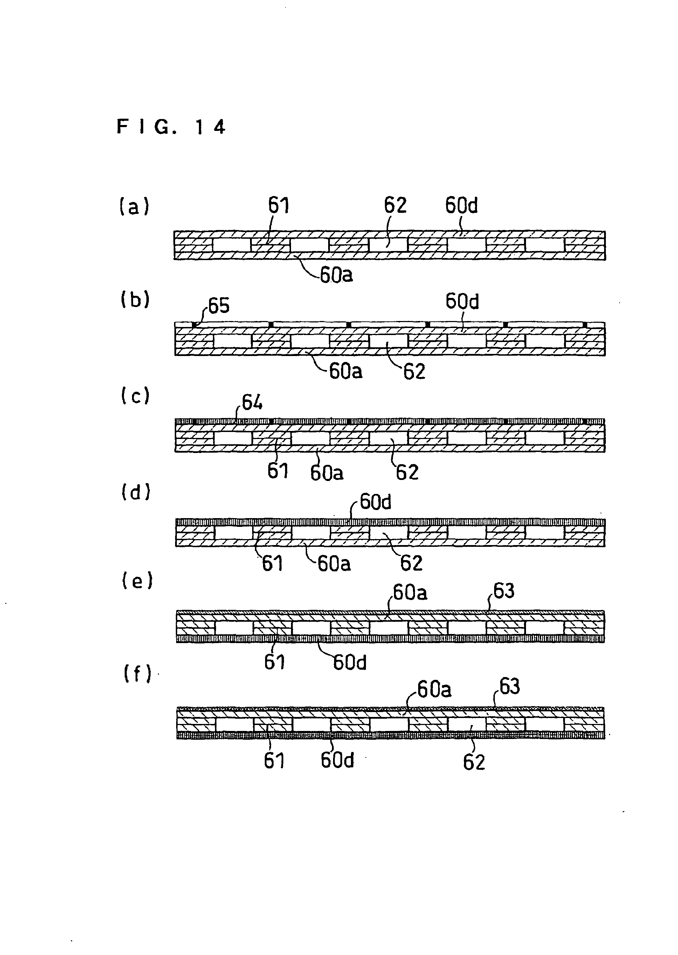

FIG. 14 shows an example of applying hydrophilic treatment to a specific part of an electrode sheet produced by a method as illustrated in FIG. 11, and of applying a water repelling treatment to other specific portion.

A mask 65 is positioned on a sheet 60d of an electrode sheet composed of a sheet 60a that forms the bottom face of a gas flow path 62, sheet 60d that forms the top face, and sheets 60b, 60c that form the side walls (FIG. 14(b)). Subsequently, a hydrophilic material 64 is printed on the surface on which the mask 65 is set (FIG. 14(c)), and the sheet 60d is impregnated with this hydrophilic material 64 (FIG. 14(d)). Next, the entire sheet is reversed, and a water repellent 63 is printed on the sheet 60a (FIG. 14(e)) and treated with heat. Consequently, an electrode having the gas flow path 62 comprising a top face made of the hydrophilic sheet 60d and a bottom face made of the sheet 60a including the water repellent layer 63 is obtained (FIG. 14(f)). The hydrophilic agent used here is silica gel, for example, while the water repellent is polytetrafluoroethylene, and the temperature of the heat treatment is around 340°C. Suitable hydrophilicity and water repellency are imparted by this heat treatment.

Next, the following description will explain a method for producing an electrode by binding two or three of the carbon fiber sheet that forms the bottom face of the gas flow path, the carbon sheets that form the side wall of the gas flow path, and the carbon fiber sheet that forms the top face of the gas flow path together with a graphitized material, or producing an electrode made of a multi-layer sheet by binding the sheets of the respective parts with a graphitized material.

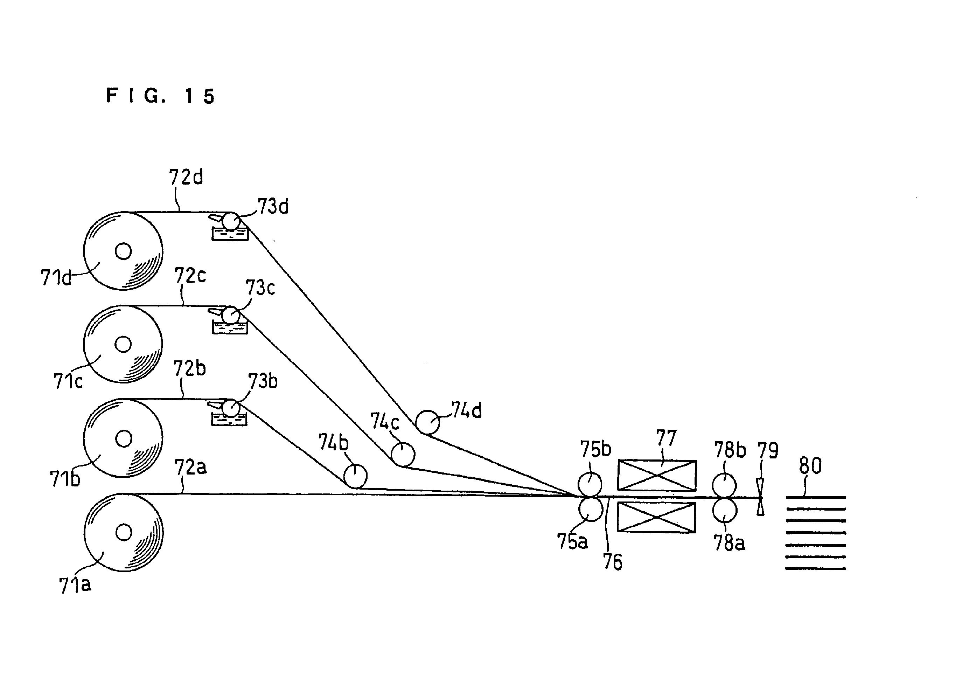

The device of FIG. 15 is explained. A first-layer raw carbonized paper 72a, a second-layer raw carbonized paper 72b, a third-layer raw carbonized paper 72c, and a fourth-layer raw carbonized paper 72d are fed from rolls 71a, 71b, 71c, and 71d, respectively. A binder is applied to the carbonized paper 72b, 72c and 72d by coating rollers 73b, 73c and 73d, respectively, and the carbonized paper 72b, 72c and 72d pass through rolls 74b, 74c and 74d and are then joined onto the carbonized paper 72a by rolls 74a and 75b. Next, a carbonized paper 76 obtained by joining the four layers together is graphitized in a kiln 77, passes through rolls 78a and 78b, and is then cut to an individual electrode size with a cutter 79. Consequently, a single conductive carbon fiber sheet 80 composed of four layers is obtained.

Next, the following description will explain the structure of a fuel cell using the above-described gas diffusion layers or porous electrodes of the present invention.

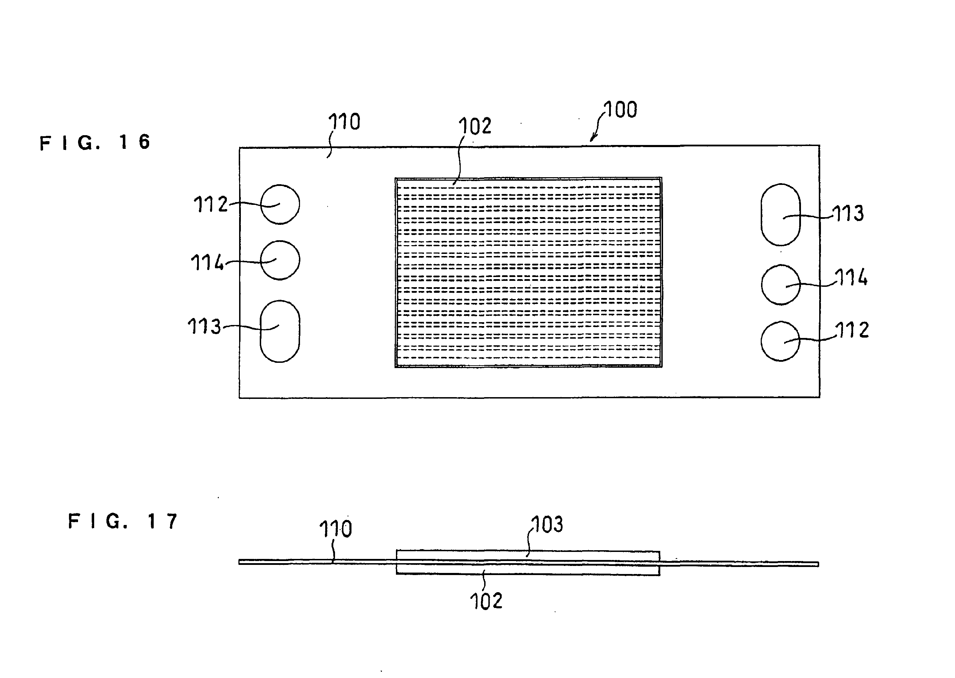

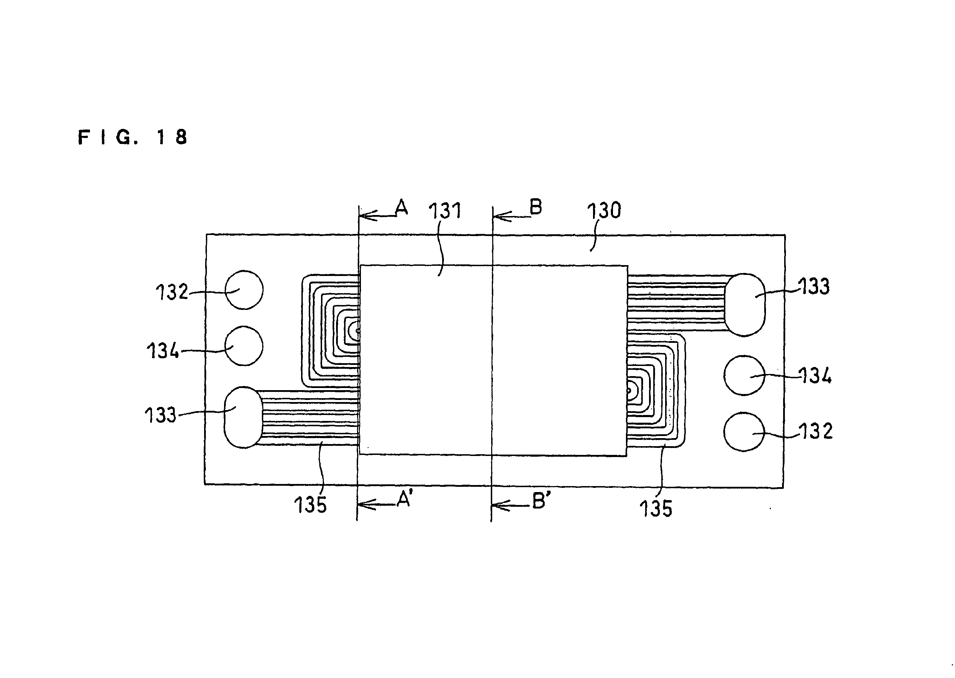

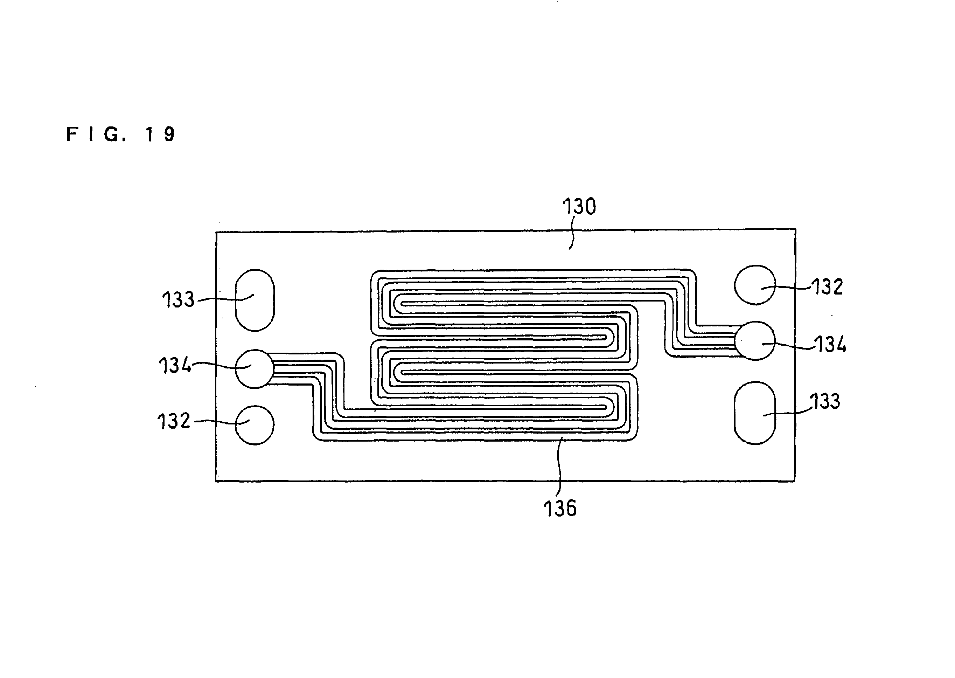

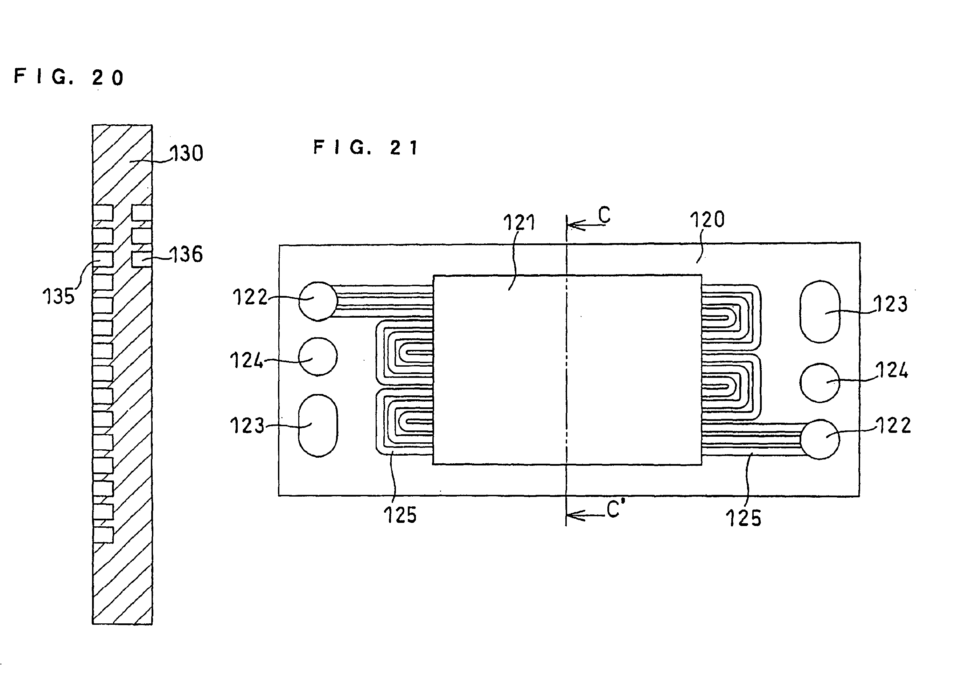

An MEA is shown in FIG. 16 and FIG. 17, a cathode-side separator plate is shown in FIGS. 18 through 20, an anode-side separator plate is shown in FIG. 21, and a fuel cell is shown in FIG. 22.

An MEA 100 is composed of a polymer electrolyte membrane 101, an anode 102 and a cathode 103 joined to both sides of the polymer electrolyte membrane 101, and a gasket 110 covering the peripheral portion of the electrolyte membrane. In the gasket 110, a pair of manifold apertures 112 for fuel gas, a pair of manifold apertures 113 for oxidant gas, and a pair of manifold apertures 113 for cooling water are formed. These manifold apertures are connected to manifold apertures of the separator plate to be described later. In this example, as shown in FIG. 22, the anode 102 and the cathode 103 are formed by the combination of a water repellent sheet 104 placed on the electrolyte membrane side and a hydrophilic electrode sheet 105 having a gas flow path 106 made of grooves which are open on the sheet 104 side.

An anode-side separator plate 120 includes a pair of manifold apertures 122 for fuel gas, a pair of manifold apertures 123 for oxidant gas, and a pair of manifold apertures 124 for cooling water. Furthermore, the anode-side separator plate 120 has a recessed portion 121 on the side facing the anode of the MEA, for accommodating the anode 102 in the center, and grooves 125 on both sides of this recessed portion, that form a gas flow path extending from one manifold aperture 122 to the other manifold aperture 122 for fuel gas by the combination with the gas flow path 106 of the anode 102. Similarly, a cathode-side separator plate 130 includes a pair of manifold apertures 132 for fuel gas, a pair of manifold apertures 133 for oxidant gas, and a pair of manifold apertures 134 for cooling water. Furthermore, the cathode-side separator plate 130 has a recessed portion 131 on the side facing the cathode of the MEA, for accommodating the cathode 103 in the center, and grooves 135 on both sides of this recessed portion, that form a gas flow path extending from one manifold aperture 133 to the other manifold aperture 133 for oxidant gas by the combination with the gas flow path 106 of the cathode 103.

The cathode-side separator plate 103 has grooves 136 for forming a cooling water flow path in its rear side so as to connect a pair of manifold apertures 134 for cooling water. By combining this with the anode-side separator plate 120 having similar grooves for cooling water flow path, a cooling part for cooling cells is produced. In a portion where the cooling part is not formed, one separator plate 140 whose one side functions as an anode-side separator plate and the other side functions as a cathode-side separator plate is inserted in between cells.

In a cell having the above-described structure, a fuel gas supplied from the manifold aperture 122 of the separator plate 120 is fed from the grooves 125 of the separator plate to the anode through the gas flow path 106 of the anode 102. Excess fuel gas and water generated by an electrode reaction are discharged from the gas flow path 106 of the anode 102 to the manifold aperture 122 through the grooves 125 of the separator plate. Similarly, an oxidant gas supplied from the manifold aperture 133 of the separator plate 130 is fed from the grooves 135 of the separator plate 130 to the anode (sic) through the gas flow path 106 of the cathode 103, and excess gas and moisture are discharged through the grooves 135 of the separator plate to the manifold aperture 133.

The following description will explain examples of the present invention.

### Example 1

A continuous fabric was produced by knitting mesophase pitch-based carbon fiber raw yarn into the shape shown in FIG. 1 and FIG. 2 and stabilized at 250°C by a continuous heating furnace, and then cut to a suitable size. The resulting fabric was carbonized at 1200° C in a batch furnace, and then graphitized at 2400°C to produce a porous electrode. For the anode, as shown in FIG. 2(a), the width of each groove and side wall for forming a gas flow path was 1.5 mm, the pitch was 3.0 mm, the groove depth was 0.4 mm, and the thickness of the bottom of groove was 0.15 mm. For the cathode, as shown in FIG. 2(b), the same configuration as the anode was adopted except that the depth of groove was 0.6 mm. In addition, an electrode was produced in the shape of a flat plate with a thickness of 0.36 mm, without a gas flow path, under the same condition.

These porous electrodes exhibit water repellency. Next, a hydrophilic electrode was prepared by applying a hydrophilic treatment to the porous electrode having the gas flow path by refluxing the electrode with 2% nitric acid for one hour. The flat electrode was not subjected to the hydrophilic treatment, and it is called a water-repellent electrode. Table 1 shows the results of evaluating the hydrophilic properties of these electrodes. For the evaluation of the hydrophilic properties, standard wetting index solutions having a variety of surface tensions were dropped, and the surface tension of a solution having the largest surface tension among the soaked standard solutions was taken as the hydrophilicity index of the layers. The hydrophilicity index shows that the greater the value, the higher the hydrophilicity. For the standard wetting index solutions, those having a surface tension between 23 mN/cm and 72 mN/cm were used.

**Table 1**

| Part | Surface tension (mN/cm) |
|---|---|
| Hydrophilic electrode | Not less than 72 |
| Water-repellent electrode | 42 |

Next, Ketjen Black EC (furnace black manufactured by Ketjen Black International Co.) having a specific surface area of 800 m²/g and DBP oil adsorption of 360 ml/100 g was caused to support platinum in a weight ratio of 1:1. 10 g of this catalyst powder was mixed with 35 g of water and 59 g of an alcohol dispersion of hydrogen ion conductive polymer electrolyte ("9% FFS" (trade name) manufactured by Asahi Glass Co., Ltd.), and then the powder was dispersed using an ultrasonic agitator to produce a catalyst layer ink. This catalyst layer ink was coated on a polypropylene film ("Torayfan 50-2500" (trade name) manufactured by Toray Industries, Inc.), and dried to form a catalyst layer. The resulting catalyst layer was cut to a predetermined size of 6 cm × 6 cm. The catalyst layer thus formed was transferred to both sides of a polymer electrolyte membrane (Nafion 112 membrane manufactured by E.I. du Pont de Nemours and Company in the U.S.A.).

An aqueous ink containing a polytetrafluoroethylene fine powder (manufactured by Daikin Industries, Ltd.) and acetylene black (manufactured by Denki Kagaku Kogyo K.K.) in a weight ratio of 1:4 was prepared. This ink was coated on one side of the water-repellent electrode and baked at 350° C for 20 minutes to form a water-repellent layer. The water-repellent layer density after baking was 2.0 mg/cm² per unit area of the electrode. An MEA was produced by joining a pair of electrodes on which the water-repellent layers were formed to the electrolyte membrane to which the catalyst layers were joined so that the water-repellent layers were present on the electrolyte membrane side, by hot-pressing at a temperature of 130°C and a pressure of 15 kg/cm². A test cell was assembled by combining this MEA with the anode and cathode as the above-mentioned hydrophilic electrodes having the gas flow paths so that the open part of the grooves is adjacent to the water-repellent electrodes.

The cell used here has the above-explained structure shown in FIG. 21.

The cell was kept at 75°C, and a pure hydrogen gas humidified and heated to various dew points was supplied to the anode, while the air humidified and heated to a dew point of 65° C was supplied to the cathode so as to execute a cell discharge test under the condition that the fuel gas utilization was 70% and the air utilization was 40%.

As a comparative example, a cell having the structure shown in FIG. 23, i.e., a unit cell including conductive separator plates which were processed to have flow paths with the same groove width, pitch and groove depth as the hydrophilic electrode, in place of the hydrophilic electrode sheets 105 having the gas flow paths, and the above-mentioned MEA sandwiched between the separator plates was assembled, and a cell discharge test was carried out under the same condition.

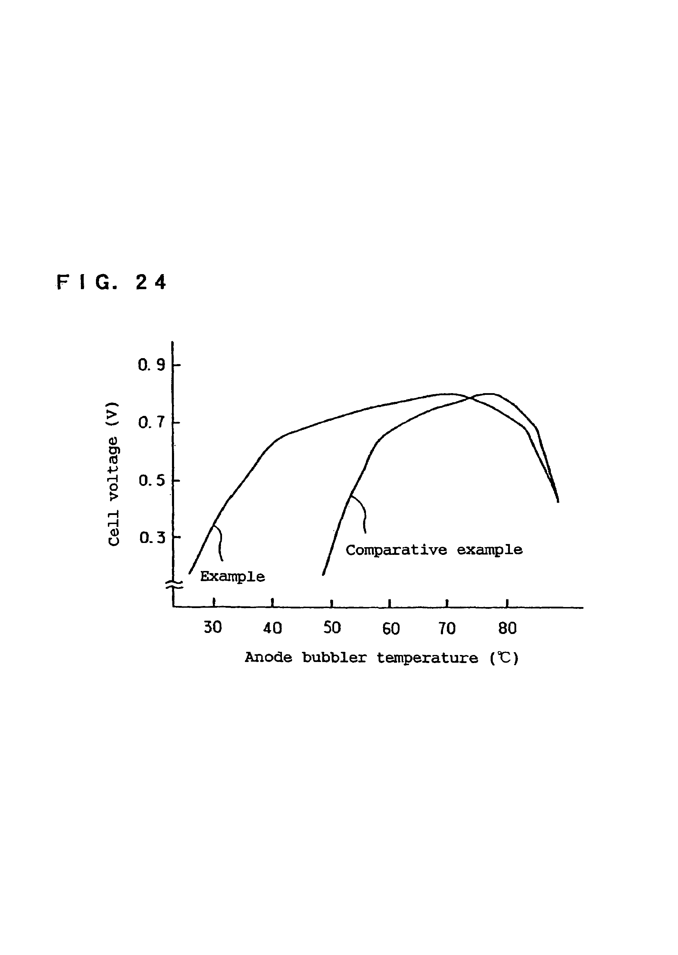

FIG. 24 shows the relationship between the anode bubbler temperature and the voltage per unit cell of the cells at a current density of 200 mA/cm². The cell of this example showed an improvement of the cell voltage in a low humidified condition when compared to the comparative example. It is considered that this improvement was made by an improvement of the utilization of water to be supplied, which was caused by an improvement of the moisture retention characteristic of the electrode.

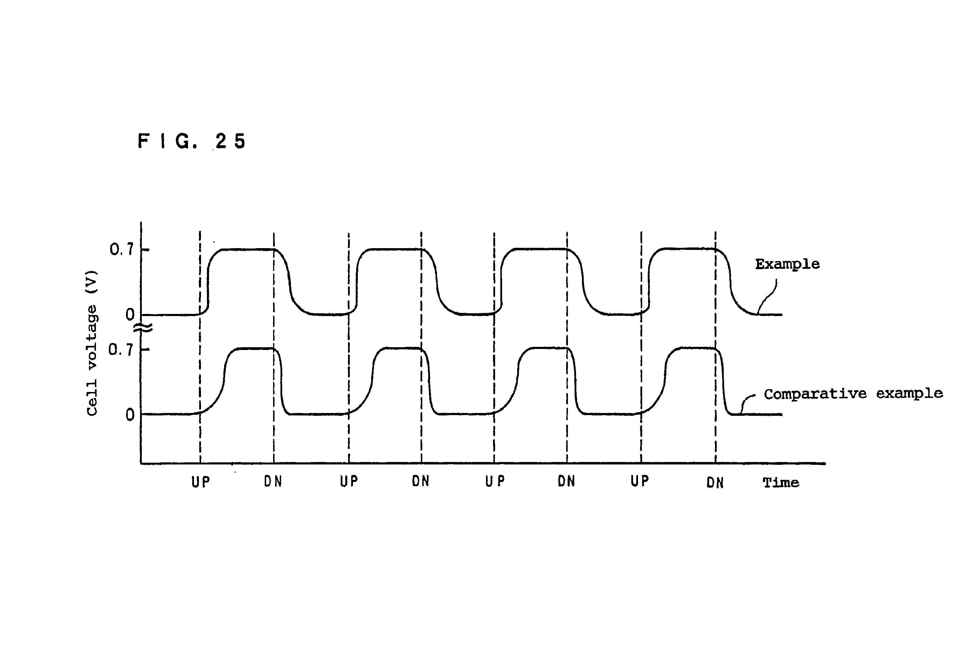

FIG. 25 shows cell voltage behavior corresponding to intermittent increase/decrease of the fuel gas. In FIG. 25, "UP" indicates the start of supply of fuel gas, and "DN" shows the termination of supply of fuel gas. It can be understood that the cell of this example has a better voltage rising characteristic than the comparative example when the fuel gas is increased with an increase in load, but has a slower response than the comparative example when the fuel gas is decreased with a decrease in load. In general, irrespective of the type of humidifying device used, there is a time lag between the fuel gas feed rate and the water feed rate, and this lag becomes a cause of the deterioration of the voltage rising characteristic. In the cell of this example, the water retained in the electrode compensates for the delay of the supply of water with respect to the supply of fuel gas, and the effect of shortening the time lag is recognized. In particular, for a fuel cell for use in vehicles, the response to an increase in load is considered more important than the response to a decrease in load, and therefore the cell of this embodiment is judged superior to the comparative example.

Cell stacks were assembled by stacking 10 cells for each cell stack in the cell structure of the above-mentioned example or comparative example, and operated under the same condition as above. Usually, in a unit cell, heating is necessary to keep the cell temperature, but, in a cell stack, cooling is necessary because the cell stack will overheat due to self-heating.

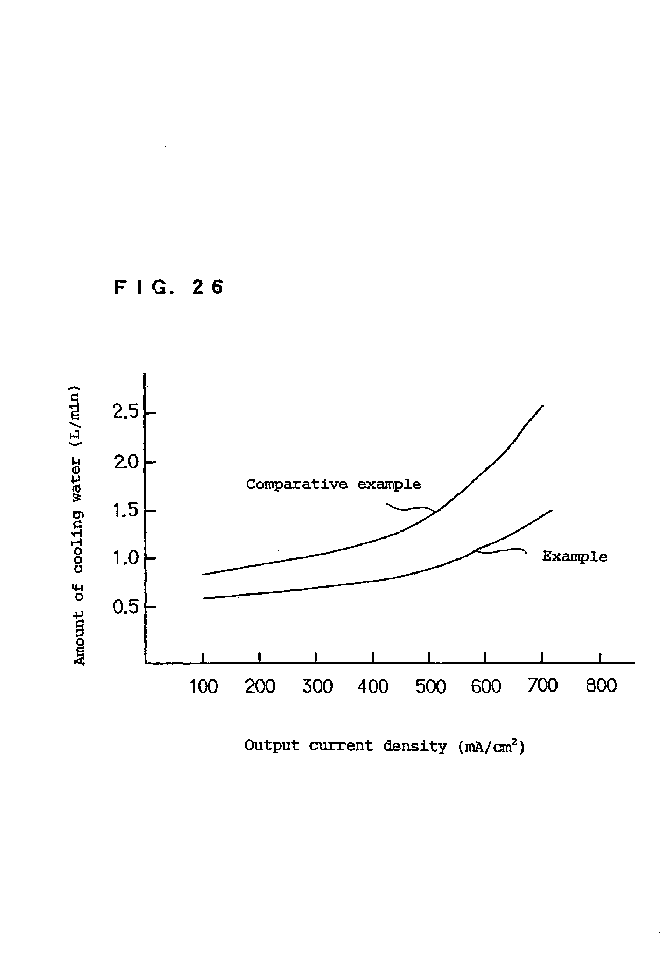

FIG. 26 shows the relationship between the output current density and the amount of cooling water necessary to keep the cell temperature at 75° C. In the cell of this example, the required amount of cooling water at a high output current density is particularly small compared to the comparative example. It is presumed that the reason for this is that a large amout of water generated at a high current density stays in the electrode temporarily, and then absorbs latent heat of vaporization and is discharged out of the cell. This characteristic is suitable particularly for fuel cells for use in vehicles, which need not to use waste heat directly and are operated at a high current density.

### Example 2

A mesophase pitch-based carbon fiber raw yarn (which was spun but had not been stabilized) was woven into a fabric with a thickness of 150 µm, and a phenol-based carbon fiber raw yarn was sewn in the fabric to have a thickness of 600 µm. The resulting fabric was graphitized after the stabilization and carbonization processes so as to produce an electrode as shown in FIG. 6. Thereafter, the fabric was activated by steam oxidation in a continuous furnace under the condition of 800° C and 240 seconds. The specific surface area and the hydrophilicity of a part that forms the bottom of the gas flow path and the side-wall part were evaluated before and after the activation, and the results of evaluation are shown in Table 2. As shown in Table 2, a significant increase was observed as a result of the activation, particularly, in the specific surface area and the hydrophilicity of the flow path's side-wall part made from the phenol-based fiber.

**Table 2**

| Part | Specific surface area (m²/g) | | Surface tension (mN/cm) | |
|---|---|---|---|---|
| | Before activation | After activation | Before activation | After activation |
| Passage's bottom part | 28 | 33 | 38 | 48 |
| Side-wall part | 115 | 652 | 44 | Not less than 72 |

A water-repellent layer similar to that of Example 1 was formed on one side of this electrode, having no gas flow path. Then, an MEA was fabricated by joining the electrodes to the electrolyte membrane so that their side having the water-repellent layer is present on the electrolyte membrane side, and a test unit cell having the cross sectional structure shown in FIG. 8 was assembled using the same separator plates as in Example 1. This cell exhibited almost the same characteristics as in Example 1.

### Example 3

A PAN-based carbon fiber which had gone through up to the carbonization process was cut to a fiber length of 2 mm, and then the fiber was made into paper to form a sheet having a thickness of 50 µm and 0.12 g/cm² as the weight per unit area.

Thereafter, as shown in FIG. 3 and FIG. 4, three sheets which were not stamped and eight stamped sheets were joined together using an aqueous solution of carboxylmethyl cellulose as a binder while positioning them. The resulting sheet was graphitized at 2400°C to produce a single electrode. The stamped shape of sheet B had a groove width of 1.5 mm and a pitch of 3 mm.

For this single electrode, a hydrophilic treatment was applied to the side-wall part by using a technique shown in FIG. 11. Specifically, an ink was prepared by adding 25 parts by weight of acetylene black (manufactured by Denki Kagaku Kogyo K.K.), 15 parts by weight of silica gel (particle size: 10 to 30 µm, JIS A grade) and 5 parts by weight of thermosetting epoxy resin (90% cross linking point was 75°C, 1 minute) to 60 parts by weight of colloidal silica (IPA-ST silica sol manufactured by Nissan Chemical Industries, Ltd.), and then mixing and kneading them. This ink was printed (coated three times) on the side-wall part forming the gas flow path of the above-mentioned electrode by screen printing, and press-fitted by pressing it with a spatula. Then, after removing the solvent at 120°C, the epoxy resin was crosslinked at 200° C and further heated at 320° C for two hours for dehydration condensation of the colloidal silica, so that the electrode with hydrophilicity imparted only to the side-wall part was obtained. It was confirmed that the electrode of this example has the same effects as those of Examples 1 and 2. In addition, it was possible to arbitrarily control the hydrophilicity of the side-wall part by an appropriate ink composition, and readily enhance/reduce the above-mentioned effects.

### Example 4

After binding the following raw carbonized papers with a pitch-based binder, the resulting paper was graphitized at 2450°C under an inert gas atmosphere for three hours to fabricate an electrode sheet X1 composed of four layers.

First layer: mesophase pitch-based carbonized paper (fiber diameter of 12 µm, fiber length of 5 mm, and a thickness of 150 µm).

Second layer: highly elastic PAN-based carbonized paper (fiber diameter of 6.5 µm, fiber length of 5 mm, and a thickness of 150 µm).

Third layer: anisotropic pitch-based carbonized paper (fiber diameter of 13 µm, fiber length of 2 mm, and a thickness of 80 µm).

Fourth layer: phenol-based carbonized paper (fiber diameter of 11 µm, fiber length of 2 mm, and a thickness of 80 µm).

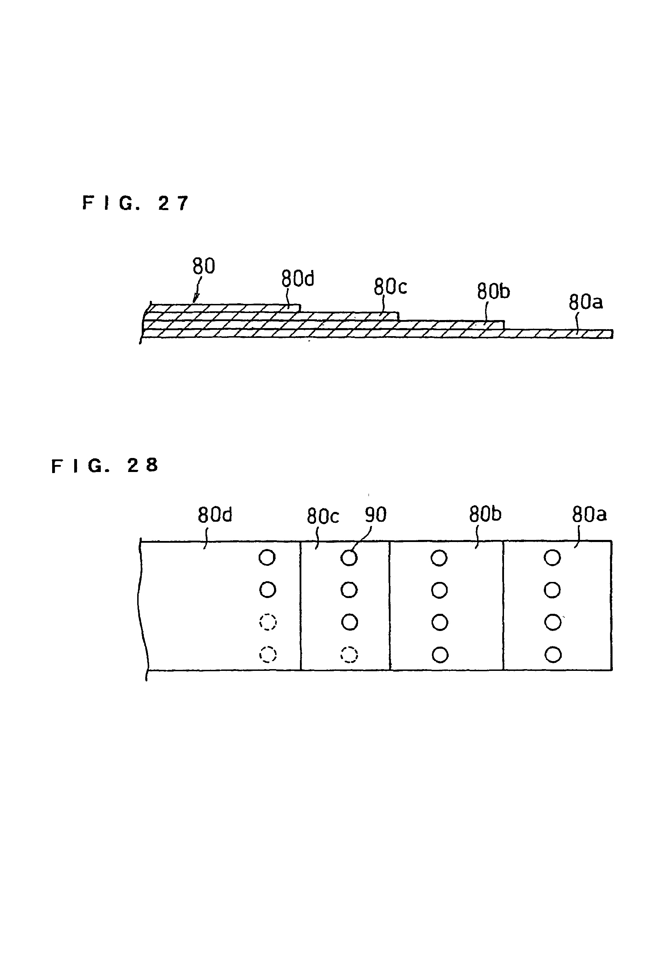

After adhering the above-mentioned sheet 80 to a glass for fixture, the sheet 80 was polished to expose the respective polished surfaces of the first layer 80a, second layer 80b, third layer 80c and fourth layer 80d as shown in FIG. 27. As indicated by 90 in FIG. 28, the water repellency of the respective layers was evaluated by dropping various standard wetting index solutions to the polished surfaces. The surface tension of a solution having the largest surface tension among the soaked standard solutions was taken as the index of water repellency of the layers. The index of water repellency shows that the smaller the value, the higher the water repellency. For the standard wetting index solutions, those having a surface tension between 23 mN/cm and 72 mN/cm were used.

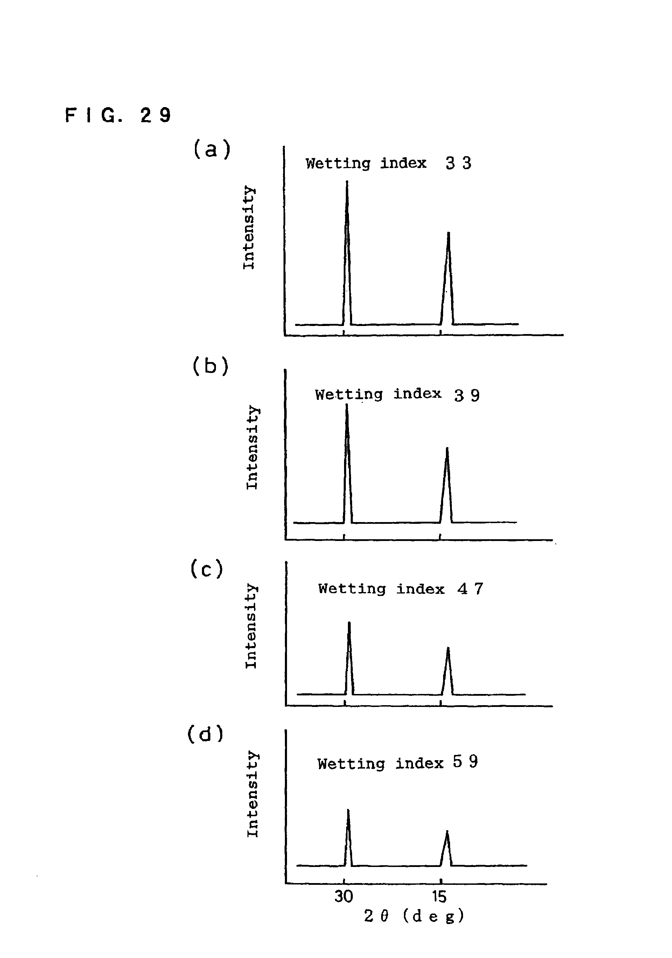

The results of evaluation of the water repellency and the X-ray diffraction patterns of the respective layers are shown in FIG. 29. (a), (b), (c) and (d) in FIG. 29 indicate the characteristics of the first layer, the second layer, the third layer, and the fourth layer, respectively. It is apparent from FIG. 29 that the layers derived from the mesophase pitch-based and PAN-based carbonized paper having a high degree of orientation and graphitization have high water repellency. On the other hand, the layers derived from the anisotropic pitch-based and phenol-based carbonized paper having a low degree of orientation and graphitization have low water repellency. In short, the sheet 80 has a water repellency gradient derived from the orientation degree and the graphitization degree.

The above-mentioned sheet was denoted as X1. Next, the sheet X1 was refluxed with 2% nitric acid for 30 minutes to add a hydroxyl group to its surface. The resulting sheet is denoted as X2. The hydroxyl group of the sheet X2 was treated with heptadecafluorodecyl trichlorosilane as a water repellent to impart water repellency. The resulting sheet is denoted as X3. A sheet obtained by refluxing the sheet X1 with 10% nitric acid for two hours to add a hydroxyl group to its surface is denoted as X4, and a sheet obtained by treating the hydroxyl group of the sheet X4 with heptadecafluorodecyl trichlorosilane as a water repellent to impart water repellency is denoted as X5. The water repellency of these sheets was evaluated in the same manner as above. The results are shown in Table 3.

**Table 3**

| | 1st layer | 2nd layer | 3rd layer | 4th layer |
|---|---|---|---|---|
| Sheet X1 | 43 | 49 | 57 | 69 |
| Sheet X2 | 67 | 72 | 72 | 72 |
| Sheet X3 | 35 | 32 | 28 | 26 |
| Sheet X4 | 72 | 72 | 72 | 72 |
| Sheet X5 | 29 | 27 | 25 | 23 |

It is apparent from Table 3 that, in the sheets X2 and X4, the gradient was increased according to the water repellency gradient order of the sheet X1, and the degree was controllable according to the treatment process. In contrast, the sheets X3 and X5 had a water repellency order reverse to the water repellency gradient order of the sheet X1, and their water repelling ability was greater than the water repelling ability of the sheet X1 and the degree was dependent on the hydrophilic properties of the sheets X2 and X4.

Thus, by combining the above-described electrode sheet manufacturing process with the chemical modification process, it becomes possible to produce a single sheet with water repelling ability of an arbitrary order and strength. Besides, the internal resistance of the sheet was almost equal to that of a usually used PAN-based or pitch-based single sheet.

### Industrial Applicability

As described above, since the present invention can impart water retention property to the electrodes without sacrificing their gas permeability, it is possible to provide secondary characteristics, such as a reduction in water to be supplied, improved response to a change in load, and the cooling effect due to latent heat of vaporization, without scarifying the cell characteristics.

## Claims

1. A polymer electrolyte fuel cell comprising: an electrolyte membrane-electrode assembly composed of a hydrogen ion conductive polymer electrolyte and a pair of electrodes sandwiching said hydrogen ion conductive polymer electrolyte membrane; and a pair of conductive separator plates sandwiching said electrolyte membrane-electrode assembly, the polymer electrolyte fuel cell being **characterized in that** each of said electrodes has: a catalyst layer in contact with said electrolyte membrane; and a gas diffusion layer made of a conductive carbon fiber sheet in contact with said catalyst layer, said gas diffusion layer comprises a gas flow path having a bottom face facing the electrolyte membrane, wherein the properties of the carbon fiber that forms the bottom face of said gas flow path are different from properties of the carbon fiber that forms a side wall of said gas flow path.

2. The polymer electrolyte fuel cell as set forth in claim 1, wherein a difference between the properties of said carbon fibers is derived from a difference in at least one of their tiber density, pore density, graphitization degree, graphite orientation degree, fiber microstructure, and hydrophilic group density.

3. The polymer electrolyte fuel cell as set forth in claim 1 or 2, wherein the carbon fiber forming the bottom face of said gas flow path has hydrophilicity lower than that of the carbon fiber forming the side wall of said gas flow path.

4. The polymer electrolyte fuel cell as set forth in claim 2, wherein the difference in the graphitization degree, graphite orientation degree, or fiber microstructure is derived from a difference between mutually different carbon fiber materials selected from the group consisting of PAN-based, pitch-based, cellulose-based, and phenol-based carbon fiber materials.

5. The polymer electrolyte fuel cell as set forth in any preceding claim, wherein said carbon fiber sheet is composed of a plurality of sheets, and a graphitized material for binding the sheets.

6. The polymer electrolyte fuel cell as set forth in any preceding claim, wherein said carbon fiber sheet is composed of a plurality of sheets having a difference in at least one of their graphitization degree, graphite orientation degree and hydrophilic group density, and a graphitized material for binding the sheets.

7. A polymer electrolyte fuel cell comprising: an electrolyte membrane-electrode assembly composed of a hydrogen ion conductive polymer electrolyte and a pair of electrodes sandwiching said hydrogen ion conductive polymer electrolyte membrane; and a pair of conductive separator plates sandwiching said electrolyte membrane-electrode assembly, the polymer electrolyte fuel cell being **characterized in that** each of said electrodes has: a catalyst layer in contact with said electrolyte membrane; and a gas diffusion layer made of a conductive carbon fiber sheet in contact with said catalyst layer, said gas diffusion layer comprises a gas flow path having a bottom face facing the electrolyte membrane and a top face facing the opposite side, wherein the properties of the carbon fiber that forms the bottom face of said gas flow path are different from properties of at least one of the carbon fiber that forms the top face of said gas flow path and the carbon fiber that forms a side wall of said gas flow path.

8. The polymer electrolyte fuel cell as set forth in claim 7, wherein the properties of the carbon fiber forming the bottom face of the gas flow path in said gas diffusion layer are same as the properties of the carbon fiber forming the side wall of said gas flow path.

9. The polymer electrolyte fuel cell as set forth in claim 7, wherein the properties of the carbon fiber forming the bottom face of the gas flow path in said gas diffusion layer are same as the properties of the carbon fiber forming the top face of said gas flow path.

10. The polymer electrolyte fuel cell as set forth in any one of claims 7 or 9, wherein a difference between the characteristics of said carbon fibers is derived from a difference in at least one of their fiber density, pore density, graphitization degree, graphite orientation degree, fiber microstructure, and hydrophilic group density.

11. The polymer electrolyte fuel cell as set forth in claim 7, wherein the carbon fiber forming the bottom face of said gas flow path has hydrophilicity lower than that of at least one of the carbon fiber forming the top face of said gas flow path and the carbon fiber forming the side wall of said gas flow path.

12. The polymer electrolyte fuel cell as set forth in claim 10, wherein the difference in the graphitization degree, graphite orientation degree, or fiber microstructure is derived from a difference between mutually different carbon fiber materials selected from the group consisting of PAN-based, pitch-based, cellulose-based, and phenol-based carbon fiber materials.

13. The polymer electrolyte fuel cell as set forth in claim 7, wherein said gas diffusion layer is composed of a flat carbon fiber sheet positioned on the polymer electrolyte membrane side, and a carbon fiber sheet having grooves that form a gas flow path and are open on the flat carbon fiber sheet side.

14. The polymer electrolyte fuel cell as set forth in claim 7, wherein said gas diffusion layer is composed of a carbon fiber sheet having grooves that form a gas flow path and are open on opposite side to the polymer electrolyte membrane, and a flat carbon fiber sheet joined to said carbon fiber sheet to cover the grooves.

15. The polymer electrolyte fuel cell as set forth in claim 7, wherein said carbon fiber sheet is composed of a plurality of sheets, and a graphitized material for binding the sheets.

16. The polymer electrolyte fuel cell as set forth in claim 7, wherein said carbon fiber sheet is composed of a plurality of sheets having a difference in at least one of their graphitization degree, graphite orientation degree and hydrophilic group density, and a graphitized material for binding the sheets.
